# EUROPÄISCHE PATENTSCHRIFT

(11) **EP 1 729 024 B1**
(45) Veröffentlichungstag und Bekanntmachung des Hinweises auf die Patenterteilung: **06.10.2010**
(21) Anmeldenummer: 06010867.7
(22) Anmeldetag: 26.05.2006
(51) Int. Cl.: F16D 13/38, F16D 13/68

(54) **Kupplungsscheibenanordnung für eine Mehrscheibenkupplung**
Clutch disc arrangement for a multi-disc friction clutch
Disque d'embrayage pour un embrayage à friction à disques multiple

(30) Priorität: 04.06.2005 DE 102005025694; 06.05.2006 DE 102006021146
(43) Veröffentlichungstag der Anmeldung: 06.12.2006
(73) Patentinhaber: ZF Friedrichshafen AG, 88046 Friedrichshafen (DE)
(72) Erfinder: Buer, Gerald, 96172 Mühlhausen (DE)

(56) Entgegenhaltungen:
- EP-A- 1 719 930
- DE-A1- 2 460 963
- DE-A1- 19 849 623

## Beschreibung

Die Erfindung betrifft eine Kupplungsscheibenanordnung für eine als Mehrscheibenkupplung ausgeführte Reibungskupplung nach dem Oberbegriff des Anspruchs 1.

Eine gattungsgemäße Kupplungsscheibenanordnung ist aus DE-A-198 49 623 bekannt.

Eine weitere Nabe ist beispielsweise aus der DE 199 04 134 A1 bekannt. Die bekannte Nabe weist einen als Blechteil gestaltetes Ringelement mit einem Profil zur Aufnahme eines von Reibbelägen in eine Welle einzuleitenden Drehmoments und einen zur Drehmomentübertragung dienenden, ein Nabenelement aufweisenden Mitnehmer auf. Der Mitnehmer ist ebenfalls als Blechteil gefertigt und hat in seinem radial äußeren Bereich eine dem Ringelement entsprechende Form.

Eine weitere Kupplungsscheibenanordnung ist beispielsweise aus der DE 100 24 088 A1 bekannt; es wird auf die dortige Figur 8 Bezug genommen. Eine derartige Kupplungsscheibenanordnung ist beispielsweise geeignet zur Verwendung in Kombination mit einer Druckplattenbaugruppe, wie aus der DE 100 25 533 A1 bekannt ist, um eine entsprechende Mehrscheibenkupplung bereitzustellen. Bei der bekannten Kupplungsscheibenanordnung ist das zweite Trägerelement an dem ersten Trägerelement in Richtung der Drehachse verlagerbar angeordnet, wobei eine Außenverzahnung des ersten Trägerelements mit einer Innenverzahnung des zweiten Trägerelements in Drehmitnahmeeingriff steht. Die beiden Trägerelemente sind jeweils topfartig ausgebildet, wobei ein jeweiliger Umfangswandungsbereich die Außenverzahnung des ersten Trägerelements und die Innenverzahnung des zweiten Trägerelements bilden. Diese sich in axialer Richtung erstreckende Umfangswandungsbereiche dienen zur axialen Überbrückung eines von einem axialen Mindestabstand der Reibbelageinheiten abhängigen axialen Abstands. Die bekannte Doppelkupplungsscheibe nimmt deswegen radial innerhalb der Reibbelageinheiten vergleichsweise viel radialen und axialen Bauraum ein, der entweder motorseitig oder getriebeseitig einkalkuliert werden muss, getriebeseitig auch in Bezug auf die Kupplungsbetätigung während eines Kuppelvorgangs, ggf. in Bezug auf das Eintauchen von Federzungen einer als Kraftspeicher dienenden Membranfeder.

Betreffend die Kopplung der beiden Trägerelemente mittels der Verzahnungen ist festzustellen, dass die Herstellung derartiger Zahnkränze herstellungstechnisch vergleichsweise kompliziert und dementsprechend vergleichsweise kostspielig ist.

Es ist eine Aufgabe der Erfindung, eine Kupplungsscheibenanordnung der angesprochenen Art bereitzustellen, die aufgrund ihrer Konstruktion für eine optimale Ausnutzung des zur Verfügung stehenden Bauraums günstig ist.

Ferner ist es eine Aufgabe der Erfindung, eine Kupplungsscheibenanordnung der angesprochenen Art bereitzustellen, die vergleichsweise kostengünstig herstellbar ist.

Zur Lösung zumindest der erstgenannten oder zweitgenannten Aufgabe, stellt die Erfindung eine Kupplungsscheibenanordnung für eine als Mehrscheibenkupplung ausgeführte Reibungskupplung nach Anspruch 1 bereit.

Die erfindungsgemäße Ausführung der Eingriffsformation bzw. ersten Eingriffsformation in flächigem Metallmaterial, insbesondere Blech, speziell die Ausführung der Eingriffsformation bzw. ersten Eingriffsformation als sich im Wesentlichen in axialer Richtung erstreckende Stege oder Laschen und radial durchgehende Aussparung dazwischen in dem flächigen Metallmaterial, ist herstellungstechnisch einfach, woraus sich entsprechende Kostenvorteile ergeben. Insbesondere kann erfindungsgemäß auf einen in Volumenmaterial einzuarbeitenden Zahnkranz verzichtet werden, was herstellungstechnisch vorteilhaft ist.

Betreffend die erfindungsgemäße Kupplungsscheibenanordnung ergeben sich erfindungsgemäß weitere Vorteile. Da das zweite Trägerelement über die Torsionsschwingungsdämpferanordnung mit dem ersten Trägerelement verbunden oder verbindbar ist, kann die Torsionsschwingungsdämpferanordnung zumindest dabei mitwirken, den axialen Abstand zwischen den beiden Trägerelementen zu überbrücken, so dass eine entsprechende Ausdehnung eines oder beider Trägerelemente in axialer Richtung insoweit nicht mehr erforderlich ist. Es muss nur noch durch entsprechende Ausgestaltung wenigstens eines das zweite Trägerelement mit dem ersten Trägerelement verbindenden Elements bzw. des ersten oder/und zweiten Trägerelements selbst dafür gesorgt werden, dass die beiden Trägerelemente in Richtung der Drehachse relativ zueinander verlagerbar sind, unter Erhalt einer Drehmitnahmeverbindung.

Erfindungsgemäß wird vorgeschlagen, dass das Ringteil mit einem/dem weiteren Element der Drehmomentübertragungsanordnung bzw. mit dem anderen Deckscheibenelement, vorzugsweise an einem einem radial äußeren Umfangsbereich desselben, zumindest in Bezug auf in Umfangsrichtung wirkende Kräfte sowie vorzugsweise in Bezug auf in axialer oder/und radialer Richtung wirkende Kräfte fest verbunden ist, insbesondere stoffschlüssig oder/und formschlüssig verbunden ist. Dabei kann man vorteilhaft vorsehen, dass das Ringteil mit dem weiteren Element bzw. dem anderen Deckscheibenelement verschweist ist.

Die Anbringung des Ringteils an dem weiteren Element der Drehmomentübertragungsanordnung bzw. an dem anderen Deckscheibenelement wird dann besonders einfach, wenn das weitere Element bzw. das andere Deckscheibenelement einen sich in Umfangsrichtung erstreckenden Kranz von Aussparungen aufweist, in die die Laschen oder Stege des Ringteils formschlüssig eingreifen, mit ihren freien Endabschnitten. Auf diese Weise wird auch eine besonders zuverlässige Drehmitnahmeverbindung zwischen dem weiteren Element bzw. Deckscheibenelement und dem Ringteil hergestellt. Eine zweckmäßige Ausgestaltung zeichnet sich dadurch aus, dass das weitere Element bzw. das andere Deckscheibenelement an seinem radial äußeren Umfangsbereich mit einer Verzahnung ausgeführt ist, die die Aussparungen zwischen Zahnabschnitten aufweist. Vorteilhaft kann dabei eine Breite der Zahnabschnitte in Umfangsrichtung nach radial außen zunehmen, um einen Klemmeingriff zwischen den Laschen bzw. Stegen und jeweiligen benachbarten Zahnabschnitten vorzusehen.

Die Erfindung wird im Folgenden anhand von in den Figuren gezeigten Ausführungsbeispielen näher erläutert.
- Fig.1: ist ein Längsschnittansicht einer erfindungsgemäßen Kupplungsscheibenanordnung samt einer zugehörigen Druckplattenbaugruppe und zeigt damit eine erfindungsgemäße Reibungskupplung, vorliegend in Form einer Mehrscheibenkupplung.
- Fig. 2: ist eine weitere Längsschnittansicht der Kupplungsscheibenanordnung samt einer Anpressplatte und einer Zwischenplatte einer Plattenanordnung der Druckplattenbaugruppe, ohne das als Widerlager dienende Schwungrad.
- Fig. 3: zeigt in Teilfigur 3a) eine Axialansicht auf ein Deckblech einer Torsionsschwingungsdämpferanordnung der Mehrscheibenkupplung samt einer daran angeordneten Reibbelageinheit, in Teilfigur 3b) einen Längsschnitt des Deckbleches und der Reibbelageinheit nach Linie B-B in Fig. 3a) und in Teilfigur 3c) einen Längsschnitt des Deckbleches und der Reibbelageinheit nach Linie C-C in Fig. 3a).
- Fig. 4: zeigt eine Axialansicht des Deckbleches und der Reibbelageinheit gemäß Fig. 3 von der anderen axialen Seite.
- Fig. 5: zeigt eine Axialansicht des Deckbleches alleine.
- Fig. 6: zeigt in Teilfigur 6a) eine Axialansicht auf eine Mitnehmerscheibe samt daran angebrachter Reibbelagscheibe der Reibbelageinheit und in Teilfigur 6b) eine Längsschnittansicht dieser Komponenten.
- Fig. 7: zeigt in Fig. 7a) eine axiale Ansicht auf ein zur Halterung der Mitnehmerscheibe gemäß Fig. 6 am Deckblech gemäß Fig. 5 dienendes Blech-Ringteil, in Teilfigur 7b) einen Schnitt durch das Ringteil nach Linie B-B in Fig. 7a), in Teilfigur 7c) einen Schnitt durch das Ringteil nach Linie C-C in Fig. 7a), in Teilfigur 7d) eine Seitenansicht des Ringteils und in Teilfigur 7e) eine perspektivische Ansicht des Ringteils.

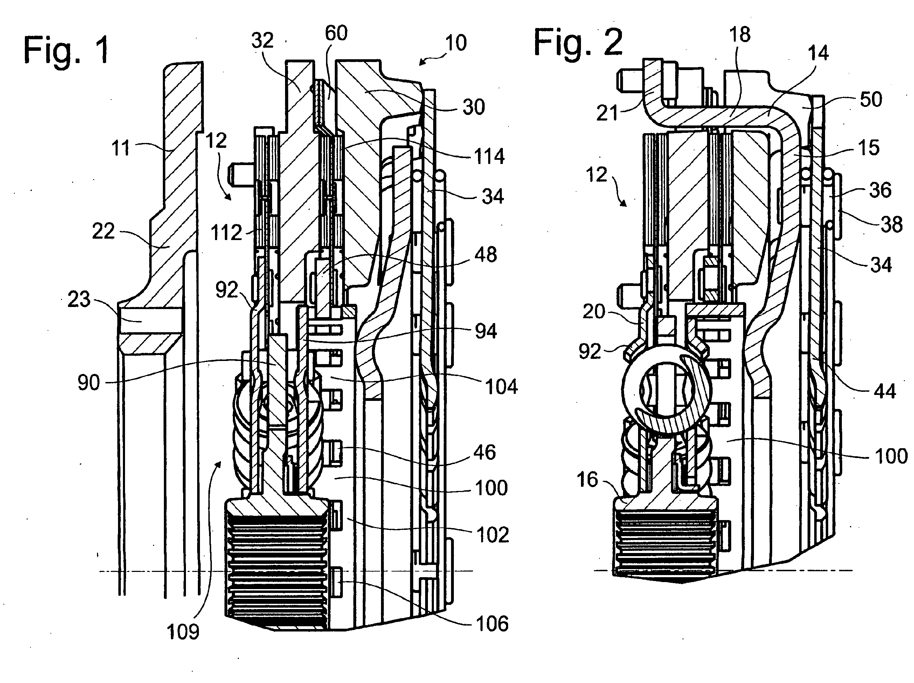

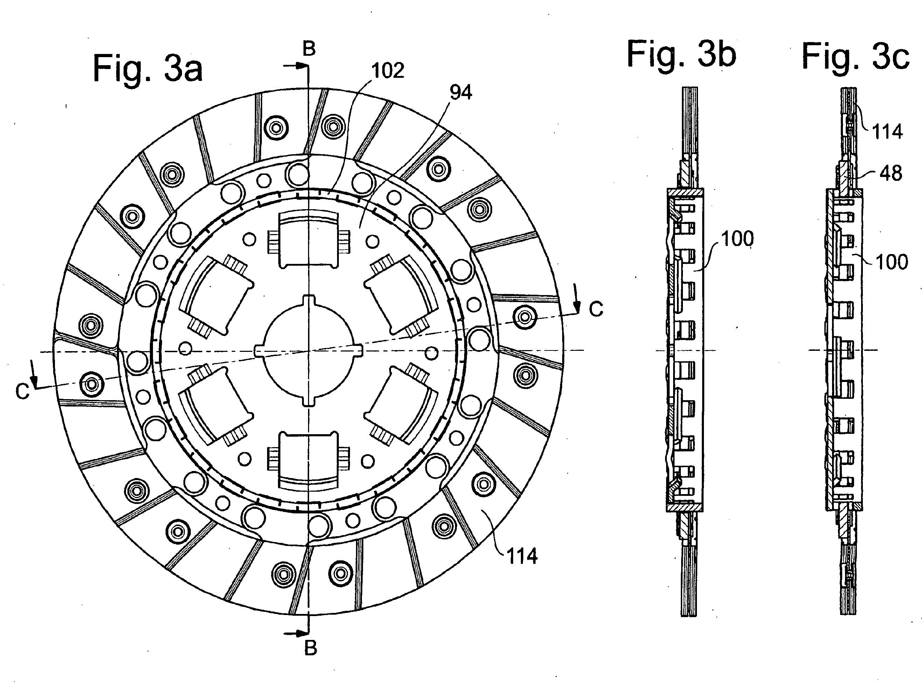

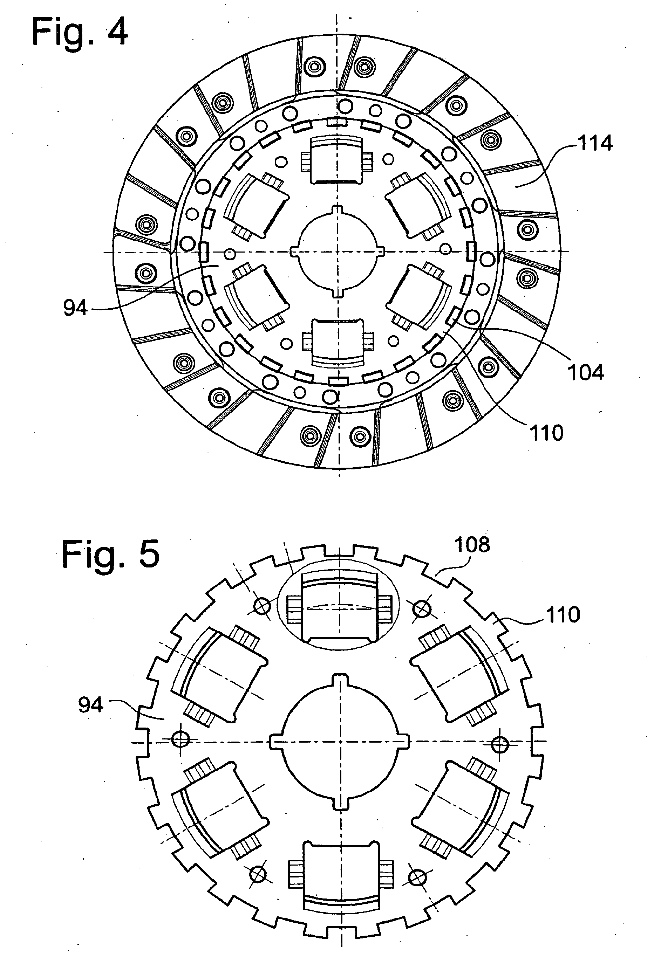

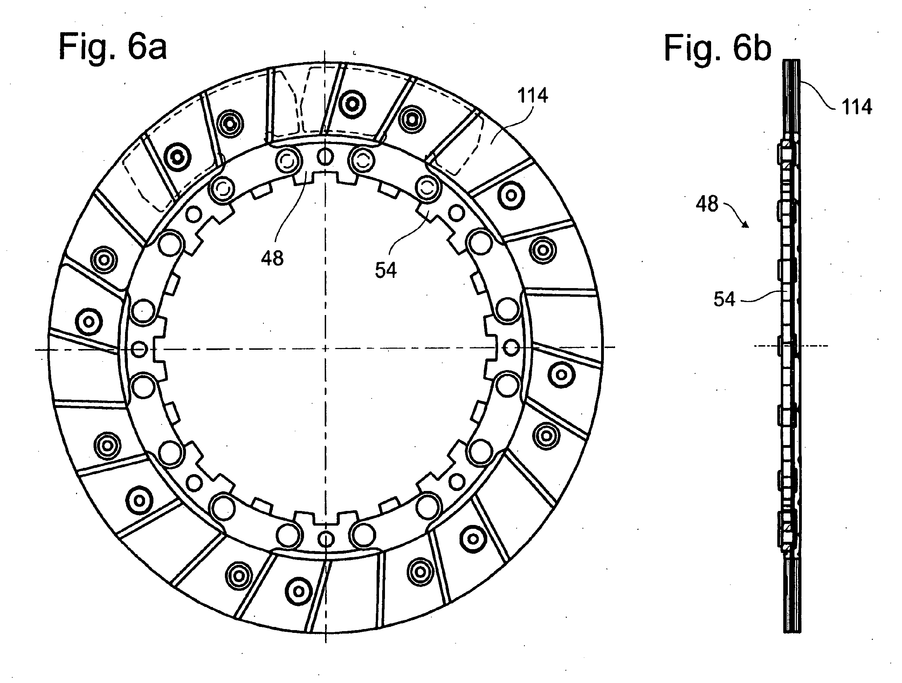

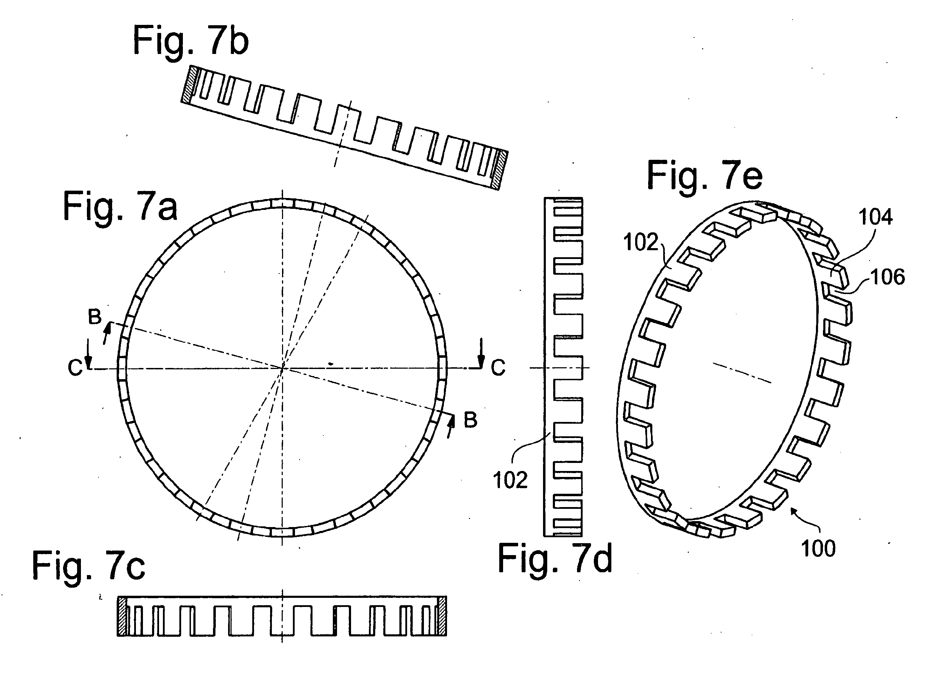

Die Fig. 1 und 2 zeigen ein Ausführungsbeispiel einer Mehrscheibenkupplung als Ganzes, mit ihrer eine Zwischenplatte und eine Anpressplatte aufweisenden Plattenanordnung, mit der gesamten Druckplattenbaugruppe, die die Plattenanordnung und ein als Widerlager dienendes Schwungrad, das Teil eines Kupplungsgehäuses ist, aufweist, sowie mit einer Zweischeiben-Kupplungsscheibenanordnung. Teile der Kupplungsscheibenanordnung selbst sind in den Fig. 3 bis 7 gezeigt.

Der Aufbau und die Funktionsweise der Reibungskupplung, speziell ihrer Druckplattenbaugruppe, lässt sich besonders einfach auf Grundlage des Inhalts der Offenlegungsschrift DE 100 25 533 A1 verstehen.

Der Aufbau und die Funktionsweise der Kupplungsscheibenanordnung lässt sich besonders einfach auf Grundlage des Inhalts der Offenlegungsschrift DE 100 24 088 A1 verstehen.

Die in den Fig. 1 und 2 gezeigte Reibungskupplung 10 umfasst ein Kupplungsgehäuse 11. Wesentlicher Bestandteil des Kupplungsgehäuses ist ein Schwungrad 22, das dafür ausgebildet ist, an einer Motorabtriebswelle angeschraubt zu werden, entweder direkt an der Motorabtriebswelle oder vermittels einer zwischen Motorabtriebswelle und Kupplung vorgesehenen Momentübertragungsanordnung, beispielsweise umfassend eine Flexplatte oder/und einen Torsionsschwingungsdämpfer oder ein Zwei-Massen-Schwungrad. Entsprechende Schrauböffnungen sind mit 23 bezeichnet.

Das Kupplungsgehäuse weist ferner ein Wandungsteil 14 auf, das einen als "Gehäusedeckel" oder "Gehäuseboden" bezeichenbaren Abschnitt 15 aufweist, der eine Membranfeder 34 trägt. Das Wandungsteil weist mehrere in Umfangsrichtung verteilt vorgesehene, sich an den Abschnitt 15 einteilig anschließende und in axialer Richtung erstreckende Stütz- oder Abstützabschnitte 18 auf, die einteilig mit flanschartigen Gehäusefüßen 21 ausgeführt sind, mit dem das Gehäuse-Wandungsteil 21 mit dem Schwungrad 12 verbindbar ist. Hierzu sind die Gehäusefüße 21 mit Schraubbohrungen ausgeführt.

Die Membranfeder 34 ist durch Niete 36 fest an dem Deckelabschnitt oder Bodenabschnitt 15 angebracht. Zwischen dem Abschnitt 15 und der Membranfeder 34 und zwischen der Membranfeder 34 und einem Haltekopf 38 der Niete ist knapp radial außerhalb der Niete ein jeweiliger Stützring angeordnet, der die Membranfeder 34 einerseits am Abschnitt 15 und andererseits an den Köpfen der Niete linienartig abstützt und insoweit ein Verschwenken von Federzungen 44 der als Kraftspeicher dienenden Membranfeder für ein Ausrücken der Reibungskupplung ermöglicht. Die Membranfedem ragen nach radial einwärts und sind dort durch einen nicht dargestellten Ausrückring eines Ausrückmechanismus beaufschlagbar.

In dem Gehäuse 12 ist in einem zwischen dem Schwungrad 22 und dem Deckel- oder Bodenabschnitt 15 gebildeten Volumenbereich eine von einer Anpressplatte 30 und einer Zwischenplatte 32 gebildete Plattenanordnung angeordnet. Zwischen der Anpressplatte 30 und der Zwischenplatte 32 befindet sich eine Reibbelageinheit 114 und zwischen der Zwischenplatte 32 und dem als Widerlagerplatte dienenden Schwungrad 22 befindet sich eine Reibbelageinheit 112. Die Reibbelageinheiten gehören zu einer Kupplungsscheibenanordnung 12, die mit einem Torsionsschwingungsdämpfer 109 ausgeführt ist, der zwischen den Reibbelageinheiten und einem Kupplungsnabenelement 16 wirkt. Die zwischen dem Schwungrad 22 und der Zwischenplatte 32 angeordnete Reibbelageinheit 112 ist an dem einen Deckblech, dem in Fig. 1 bzw. 2 linken Deckblech 92, angebracht, wohingegen die andere Reibbelageinheit 114 vermittels eines Mitnehmerrings 48 an einer auf spezielle Weise gebildeten Außenverzahnung des anderen Deckbleches 94 des Torsionsschwingungsdämpfers in axialer Richtung verschiebbar drehmomentübertragend geführt ist. Die Deckbleche zusammen mit dem Mitnehmerring 48 dienen als Trägeranordnung für die Reibbelageinheiten. In Fig. 1 bezeichnet 20 einen als Trägerelement für die Reibbelageinheit 112 dienenden Abschnitt des Deckblechs 92.

Die Membranfeder 34 beaufschlagt die Anpressplatte 30 derart, dass sie in Richtung zum Schwungrad 22 zu gepresst ist. Die Reibbelageinheiten sind dann zwischen der Anpressplatte 30 und der Zwischenplatte 32 bzw. zwischen der Zwischenplatte 32 und dem Schwungrad 22 eingespannt, die Kupplung ist dann eingerückt. Durch Betätigung der Federzungen 44 vermittels des angesprochenen Ausrückrings im Sinne einer Verlagerung in Richtung zum Schwungrad kann die kraftmäßige Beaufschlagung der Anpressplatte 30 zum teilweisen oder vollständigen Ausrücken der Kupplung zumindest teilweise aufgehoben werden. Die Anpressplatte 30 und die Zwischenplatte 32 einerseits und die Zwischenplatte 32 und das Schwungrad 22 andererseits werden dann durch eine zwischen diesen Komponenten wirkende Lüftfederanordnung auseinander gedrückt, so dass der Reibeingriff der Plattenanordnung und des Schwungrads mit den Reibbelageinheiten dann entsprechend aufgehoben und die Reibungskupplung entsprechend ausgerückt wird. Dieses Ausrücken geht einher mit einer entsprechenden axialen Verschiebung der Reibbelageinheit 114, die durch die sich unter der Rückstellkraft der Federanordnung in Richtung zur Membranfeder 34 verstellende Zwischenplatte 32 weg gedrückt wird. Die Membranfeder 34 steht unmittelbar mit Abstützrippen 50 der Anpressplatte 30 in Eingriff, und zwar an von einem Ringabschnitt der Membranfeder 34 radial vorstehenden Membranfederlappen.

Die Lüftfederanordnung ist von zwischen dem Kupplungsgehäuse 12 und der Zwischenplatte 32 wirkenden ersten Tangentialblattfedern und von zwischen der Zwischenplatte 32 und der Anpressplatte 30 wirkenden zweiten Tangentialblattfeder gebildet, von denen in Fig. 1 nur ein zwischen der Zwischenplatte 32 und der Anpressplatte 30 wirkendes Tangentialblattfederpaar 60 zu erkennen ist. Die Tangentialblattfedern können einerseits an der Anpressplatte 30 und andererseits an der Zwischenplatte 32 bzw. einerseits an der Zwischenplatte 32 und andererseits an dem Schwungrad 22 angenietet sein. Betreffend die zwischen dem Kupplungsgehäuse 12 und der Zwischenplatte 32 wirkenden ersten Tangentialblattfedern bietet sich ferner auch eine Befestigung der betreffenden Tangentialblattfedern gehäuseseitig an von den Gehäusefüßen 21 ausgehenden Befestigungsabschnitten an. Es sind jeweils mehrere erste und zweite Tangentialblattfederpaare vorgesehen, die in Umfangsrichtung verteilt sind und dafür sorgen, dass die Zwischenplatte 32 und die Anpressplatte 30 definiert im Gehäuse gehalten und dabei definiert radial und gegen Relativverdrehung zum Gehäuse abgestützt sind. Die Tangentialblattfedern haben dabei Drehmomentübertragungsfunktion zwischen dem Kupplungsgehäuse einerseits und der Zwischenplatte 32 und der Anpressplatte 30 andererseits.

Der Torsionsschwingungsdämpfer 109 ist auf übliche Weise aufgebaut. Das Nabenelement 16 ist mit einem damit fest verbundenen, vorliegend einteiligen zentralen Scheibenelement 90 ausgeführt und auf beiden axialen Seiten des zentralen Scheibenelements sind jeweils das Deckscheibenelement 92 bzw. das Deckscheibenelement 94 relativ zum Nabenelement 16 verdrehbar angeordnet. Zwischen dem zentralen Scheibenelement 90 und dem Deckscheibenelement 92 einerseits und zwischen dem zentralen Scheibenelement 90 und dem Deckscheibenelement 94 andererseits sind Reib- und Lagerringe sowie eine den gewünschten Reibeingriff herstellende Anpressfeder angeordnet. Die beiden Deckscheibenelemente sind auf an sich bekannte Weise, beispielsweise durch sich in axialer Richtung erstreckende Verbindungsbolzen, zur gemeinsamen Drehung relativ zum Nabenelement verbunden und in einem gewünschten Axialabstand gehalten. Die Deckblechelemente und das zentrale Scheibenelement weisen jeweils Federfenster auf, an welchen in Umfangsrichtung jeweilige Dämpferfedem 102 abgestützt sind, die eine Relativverdrehbewegung der Deckscheibenelemente relativ zum Nabenelement und seinem zentralen Scheibenelement zulassen. Die Dämpferfedem können, wie in Fig. 1 und 2 erkennbar, von Schraubendruckfedern gebildet sein, ggf. auch von zwei ineinander geschachtelten Schraubendruckfedern unterschiedlichen Windungsdurchmessers.

Die Reibbelageinheiten 112 und 114 sind von einer jeweiligen Belagträgerscheibe und den auf beiden axialen Seiten der Belagträgerscheibe angebrachten Reibbelägen gebildet. Die zwischen dem Schwungrad 22 und der Zwischenplatte 32 angeordnete Reibbelageinheit 112 ist mit ihrer Reibbelagträgerscheibe fest am Deckscheibenelement 92 angebracht, beispielsweise mit diesem mittels Niete vernietet. Die andere Reibbelageinheit 14 ist mit ihrer Belagträgerscheibe an einem auch als Mitnehmerscheibe oder Mitnehmerring bezeichenbaren Trägerelement 48 fest angebracht, beispielsweise ebenfalls mittels Niete vernietet. Der Mitnehmerring 48 sitzt mit einer Innenverzahnung 54 auf einer axial langgestreckten, auf spezielle Weise gebildeten Außenverzahnung 46 des schwungradfernen Deckscheibenelements 94.

Zur Bildung dieser Außenverzahnung 46 ist an einem radial äußeren Umfangsbereich des Deckscheibenelements 94 ein Blechring 100 angebracht, der von einem Ringabschnitt 102 vorstehende Stege 104 aufweist, zwischen denen der Blechring durch Aussparungen 106 unterbrochen ist. In Umfangsrichtung wechseln sich gleichmäßig Stege 104 und Aussparungen 106 ab. In die Aussparung 106 greifen jeweilige Zähne der Innenverzahnung 54 des Mitnehmerrings 48 ein, wie in den Fig. 1, 2 und den Teilfiguren b) und c) von Fig. 3 erkennbar.

Die Stege 104 sind in Aussparungen 108 zwischen Zähnen 110 am Außenumfang des Deckscheibenelements 94 eingefügt, wobei eine nach radial außen leicht zunehmende Breite der Zähne 110 in Umfangsrichtung für eine gewisse Klemmung der Stege 104 sorgt. Die Stege 104 sind mit ihren freien Enden zwischen die Zähne 110 eingeschoben, so dass der Ringabschnitt 102 des Blechrings einen Axialanschlag für die Innenverzahnung des Mitnehmerrings 48 bildet. Als entgegengesetzter Axialanschlag dient das Deckscheibenelement 94 selbst.

Die Verkopplung des Mitnehmerrings 48 mit dem Deckscheibenelement 94 vermittels des Blechrings 100 ermöglicht eine vergleichsweise reibungsfreie axial verschiebliche Führung der Innenverzahnung 54 an der speziellen, von den Stegen 104 und den radial durchgehenden Aussparungen 106 dazwischen gebildeten Außenverzahnung 46 des Deckscheibenelements 94. Der Blechring 100, der vorzugsweise mit dem Deckscheibenelement 94 an den freien Enden der Stege 104 mit dem Außenumfang des Deckscheibenelements 94 verschweißt ist, verleiht dem Deckscheibenelement 94 zusätzliche Stabilität gegen Verkippung oder Verbiegung, so dass Verkantungen zwischen der von den Stegen 104 und den Zwischenräumen 106 gebildeten Außenverzahnung mit der Innenverzahnung des Mitnehmerrings 48 zuverlässig vermieden werden.

Durch die beschriebene Halterung, Drehverkopplung und axiale Führung des Mitnehmerrings 48 an dem Deckscheibenelement 94 vermittels des Blechrings 100 kann sich die Reibbelageinheit 114 im durch die Anschläge definierten Axialbereich frei bewegen, wobei in Umfangsrichtung die erforderliche Drehmomentübertragungskopplung erreicht ist und überdies der Mitnahmering 48 mit der Reibbelageinheit 114 definiert radial gehalten ist. Besondere Montagefreundlichkeit ergibt sich auch daraus, dass der Mitnahmering 48 mit der Reibbelageinheit 114 verliersicher an dem Deckscheibenelement 94 gehalten ist. Es wird hierzu zuerst der Mitnahmering 48 mit seiner Innenverzahnung 54 in die Ausparungen 106 zwischen den Blechringstegen 104 eingelegt und dann der Blechring an seinen Stegen 104 mit dem Deckscheibenelement 94 verschweißt.

Gegenüber herkömmlichen Lösungen mit in Volumenmaterial ausgefüllten Verzahnungen bietet die beschriebene Lösung den großen Vorteil, dass die Herstellung des Blechrings mit den Stegen und Aussparungen dazwischen sehr kostengünstig ist. Auch der Mitnahmering 48 mit seiner Innenverzahnung kann sehr einfach und kostengünstig hergestellt werden. Gegenüber herkömmlichen Zahnkränzen ist die Herstellung der speziellen Außenverzahnung des Deckblechs 94 und der Innenverzahnung des Mitnahmerings 48 wesentlich vereinfacht und dementsprechend deutlich kostengünstiger.

Wie insbesondere in den Fig. 1 und 2 gut erkennbar, sind die Deckscheibenelemente im Wesentlichen planar bzw. nur wenig gekröpft ausgeführt und insoweit besonders einfach herstellbar. Die Deckscheibenelemente sind vorzugsweise also Blechteile, als Deckbleche, ausgeführt.

Das Nabenelement 16 zusammen mit dem Torsionsschwingungsdämpfer 106 und dem am Deckscheibenelement 94 angebrachten Ringteil 100 kann als Nabe der Kupplungsscheibenanordnung 12 aufgefasst werden. Es ist vorstellbar, den Blechring 100 mit axial längeren Stegen 104 auszuführen, so dass mehrere Mitnahmeringe in der Art des Mitnahmerings 48, die jeweils eine Reibbelageinheit tragen, daran axial geführt sein könnten, etwa um eine Kupplungsscheibenanordnung mit mehreren über das Ringteil 100 am Nabenelement 16 angebundenen Reibbelageinheiten bereitzustellen.

## Patentansprüche

1. Kupplungsscheibenanordnung für eine als Mehrscheibenkupplung ausgeführte Reibungskupplung, umfassend:
- wenigstens zwei Reibbelageinheiten (112, 114);
- ein mit einer Welle drehfest verbindbares oder verbundenes Nabenelement (16);
- eine Trägeranordnung (20, 48), mit welcher die Reibbelageinheiten (112, 114) im Wesentlichen drehfest verbunden sind und über welche die Reibbelageinheiten (112, 114) mit dem Nabenelement (16) verbunden oder verbindbar sind;
- eine Torsionsschwingungsdämpferanordnung (109), die ein mit dem Nabenelement (16) fest verbundenes oder mit diesem einteiliges zentrales Scheibenelement (90) und auf beiden axialen Seiten des zentralen Scheibenelements (90) jeweils ein zumindest beschränkt relativ zum Nabenelement (16) verdrehbares Deckscheibenelement (92, 94) und eine zwischen dem zentralen Scheibenelement (90) und den Deckscheibenelementen (92, 94) wirkende Dämpfungs- oder/und Federelementanordnung (102) aufweist;
wobei die Trägeranordnung (20, 48) umfasst:
- ein über die Torsionsschwingungsdämpferanordnung (109) mit dem Nabenelement (16) verbundenes oder verbindbares, mit einem (92) der Deckscheibenelemente (92, 94) fest verbundenes oder mit diesem einteiliges erstes Trägerelement (20), mit welchem eine (12) der Reibbelageinheiten (12, 14) fest verbunden ist, und
- ein über die Torsionsschwingungsdämpferanordnung (106) mit dem Nabenelement (16) verbundenes oder verbindbares zweites Trägerelement (48), mit welchem eine weitere der Reibbelageinheiten (12, 14) fest verbunden ist und welches mit dem ersten Trägerelement (20) zur gemeinsamen Drehung und bezüglich diesem im Wesentlichen in Richtung einer Drehachse (A) verlagerbar verbunden oder verbindbar ist; wobei
- das zweite Trägerelement (48) über die Torsionsschwingungsdämpferanordnung (109) mit dem ersten Trägerelement (20) verbunden oder verbindbar ist und wobei ein mit dem anderen Deckscheibenelement (94) fest verbundenes Zwischenträgerelement (100) als Anschlusselement (100) zur Drehmitnahmeankopplung und Halterung des zweiten Trägerelements (48) dient und zumindest bereichsweise aus flächigem Metallmaterial, insbesondere Blech, gebildet ist, in welchem sich im Wesentlichen in axialer Richtung erstreckende Stege (104) oder Laschen und radial durchgehende Aussparungen (106) dazwischen ausgeführt sind, die eine als Außenverzahnung dienende erste Eingriffsformation (46) bilden,
**dadurch gekennzeichnet,**
**dass** das Anschlusselement (100) bzw. Zwischenträgerelement (100) als ein Ringteil ausgeführt ist, welches wenigstens einen in Umfangsrichtung durchgehenden Ringabschnitt (102) aufweist, von dem die einteilig mit dem Ringabschnitt zusammenhängenden Stege (104) oder Laschen in axialer Richtung vorstehen und wobei das Ringteil (100) mittels der freien Endabschnitte der Laschen oder Stege (104) mit dem äußeren Umfangsbereich eines/des weiteren Elements (94) der Drehmomentübertragungsanordnung bzw. des anderen Deckscheibenelements (94) zumindest in Bezug auf in Umfangsrichtung wirkende Kräfte fest verbunden ist, wobei
- das zweite Trägerelement (48) vermittels der ersten Eingriffsformation (46) mit dem anderen (94) der Deckscheibenelemente (92, 94) drehfest und bezüglich diesem im Wesentlichen in Richtung der Drehachse (A) verlagerbar verbunden oder verbindbar ist und wobei
- das zweite Trägerelement (48) eine im Wesentlichen nach radial innen gerichtete zweite Eingriffsformation (54), vorzugsweise bildend eine Innenverzahnung (54), aufweist, welche mit der ersten Eingriffsformation (46) in Drehmitnahmeeingriff steht oder bringbar ist.

2. Kupplungsscheibenanordnung nach Anspruch 1,
**dadurch gekennzeichnet, dass** das zweite Trägerelement (48) von einem im Wesentlichen planen Ringscheibenteil gebildet ist, welches an einem Innenumfang die zweite Eingriffsformatio (54) aufweist.

3. Kupplungsscheibenanordnung nach Anspruch 1 oder 2,
**dadurch gekennzeichnet, dass** das Ringteil (100) mit dem weiteren Element (94) bzw. dem anderen Deckscheibenelement (94) verschweißt ist.

4. Kupplungsscheibenanordnung nach einem der Ansprüche 1-3,
**dadurch gekennzeichnet, dass** das weitere Element (94) bzw. das andere Deckscheibenelement (94) einen sich in Umfangsrichtung erstreckenden Kranz von Aussparungen (108) aufweist, in die die Laschen oder Stege (104) des Ringteils (100) mit ihren freien Endabschnitten formschlüssig eingreifen.

5. Kupplungsscheibenanordnung nach Anspruch 4,
**dadurch gekennzeichnet, dass** das weitere Element (94) bzw. das andere Deckscheibenelement (94) an seinem radial äußeren Umfangsbereich mit einer Verzahnung (108, 100) ausgeführt ist, die die Aussparungen (108) zwischen Zahnabschnitten (110) aufweist.

6. Kupplungsscheibenanordnung nach Anspruch 5,
**dadurch gekennzeichnet, dass** eine Breite der Zahnabschnitte (110) in Umfangsrichtung nach radial außen zunimmt, um einen Klemmeingriff zwischen den Laschen bzw. Stegen (104) und jeweiligen benachbarten Zahnabschnitten (110) vorzusehen.

## Claims

1. Clutch disc arrangement for a friction clutch which is designed as a multi-disc clutch, comprising:
- at least two friction lining units (112, 114);
- a hub element (16) which can be or is rotationally fixedly connected to a shaft;
- a carrier arrangement (20, 48) to which the friction lining units (112, 114) are connected in a substantially rotationally fixed manner and via which the friction lining units (112, 114) are or can be connected to the hub element (16) ;
- a torsional vibration damper arrangement (109) which has a central disc element (90) fixedly connected to or formed in one piece with the hub element (16), and has, on both axial sides of the central disc element (90), in each case one cover disc element (92, 94) rotatable relative to the hub element (16) at least to a restricted extent, and has a damping and/or spring element arrangement (102) acting between the central disc element (90) and the cover disc elements (92, 94),
with the carrier arrangement (20, 48) comprising:
- a first carrier element (20) which is or can be connected via the torsional vibration damper arrangement (109) to the hub element (16) and which is fixedly connected to or formed in one piece with one (92) of the cover disc elements (92, 94), to which first carrier element (20) one (12) of the friction lining units (12, 14) is fixedly connected, and
- a second carrier element (48) which is or can be connected via the torsional vibration damper arrangement (106) to the hub element (16) and to which a further one of the friction lining units (12, 14) is fixedly connected and which is or can be connected to the first carrier element (20) for common rotation and so as to be movable relative thereto substantially in the direction of a rotational axis (A);
- with the second carrier element (48) being connected or connectable via the torsional vibration damper arrangement (109) to the first carrier element (20), and with an intermediate carrier element (100), which is fixedly connected to the other cover disc element (94), serving as a connecting element (100) for rotationally driving coupling and retention of the second carrier element (48), and being formed at least in regions from laminar metal material, in particular sheet metal, in which are formed webs (104) or lugs extending substantially in the axial direction and interposed radially continuous cutouts (106), which webs (104) or lugs and cutouts (106) form a first engagement formation (46) which serves as an external toothing,
**characterized**
**in that** the connecting element (100) or intermediate carrier element (100) is formed as an annular part having at least one annular section (102) which is continuous in the circumferential direction and from which the webs (104) or lugs which are formed in one piece with the annular section project in the axial direction, and with the annular part (100) being fixedly connected, at least with regard to forces acting in the circumferential direction, by means of the free end sections of the lugs or webs (104) to the outer circumferential region of a/the further element (94) of the torque transmission arrangement or of the other cover disc element (94),
- with the second carrier element (48) being connected or connectable by means of the first engagement formation (46) to the other (94) of the cover disc elements (92, 94) in a rotationally fixed manner and so as to be movable relative thereto substantially in the direction of the rotational axis (A), and
- with the second carrier element (48) having a substantially radially inwardly directed second engagement formation (54), preferably forming an internal toothing (54) which is or can be placed in rotationally driving engagement with the first engagement formation (46).

2. Clutch disc arrangement according to Claim 1, **characterized in that** the second carrier element (48) is formed by a substantially planar annular disc part which has the second engagement formation (54) on an inner circumference.

3. Clutch disc arrangement according to Claim 1 or 2, **characterized in that** the annular part (100) is welded to the further element (94) or to the other cover disc element (94).

4. Clutch disc arrangement according to one of Claims 1-3,
**characterized in that** the further element (94) or the other cover disc element (94) has a ring of cutouts (108) which extends in the circumferential direction, into which cutouts (108) the lugs or webs (104) of the annular part (100) engage with their free end sections.

5. Clutch disc arrangement according to Claim 4, **characterized in that** the further element (94) or the other cover disc element (94) is formed, on its radially outer circumferential region, with a toothing (108, 100) which has the cutouts (108) between tooth sections (110).

6. Clutch disc arrangement according to Claim 5, **characterized in that** a width of the tooth sections (110) in the circumferential direction increases in the radially outward direction, so as to provide jamming engagement between the lugs or webs (104) and the respective adjacent tooth sections (110).

## Revendications

1. Disque d'embrayage pour un embrayage à friction réalisé sous la forme d'un embrayage à disques multiples, comprenant:
- au moins deux unités de garnitures de friction (112, 114);
- un élément de moyeu (16) assemblé ou apte à être assemblé solidairement en rotation à un arbre;
- un dispositif de support (20, 48), avec lequel les unités de garnitures de friction (112, 114) sont assemblées de façon essentiellement solidaire en rotation et par lequel les unités de garnitures de friction (112, 114) sont ou peuvent être assemblées à l'élément de moyeu (16);
- un dispositif d'amortissement des vibrations de torsion (109), qui comprend un élément de disque central (90) solidaire de l'élément de moyeu (16) ou réalisé d'une seule pièce avec celui-ci et un élément de disque opposé (92, 94) pouvant tourner au moins d'une façon limitée par rapport à l'élément de moyeu (16) respectivement sur les deux côtés axiaux de l'élément de disque central (90) et un dispositif d'élément d'amortissement et/ou de suspension (102) opérant entre l'élément de disque central (90) et les éléments de disque opposés (92, 94);
dans lequel le dispositif de support (20, 48) comprend:
- un premier élément de support (20) assemblé ou pouvant être assemblé à l'élément de moyeu (16) au moyen du dispositif d'amortissement des vibrations de torsion (109), solidaire d'un (92) des éléments de disque opposés (92, 94) ou réalisé d'une seule pièce avec celui-ci, élément de support duquel une (12) des unités de garnitures de friction (12, 14) est solidaire, et
- un deuxième élément de support (48) assemblé ou pouvant être assemblé à l'élément de moyeu (16) au moyen du dispositif d'amortissement des vibrations de torsion (109), élément de support duquel une autre des unités de garnitures de friction (12, 14) est solidaire et qui est assemblé ou peut être assemblé avec le premier élément de support (20) pour la rotation commune et de façon déplaçable par rapport à celui-ci essentiellement dans la direction d'un axe de rotation (A), dans lequel
- le deuxième élément de support (48) est assemblé ou peut être assemblé au premier élément de support (20) au moyen du dispositif d'amortissement des vibrations de torsion (109) et dans lequel un élément de support intermédiaire (100) solidaire de l'autre élément de disque opposé (94) sert d'élément de raccordement (100) pour le couplage d'entraînement en rotation et le soutien du deuxième élément de support (48) et est formé, au moins localement, de matériau métallique plat, en particulier de tôle, dans lequel des nervures (104) ou des pattes s'étendant essentiellement en direction axiale et des découpes radialement continues (106) sont réalisées entre ceux-ci, en formant une première formation de prise (46) servant de denture extérieure,
**caractérisé en ce que** l'élément de raccordement (100) ou l'élément de support intermédiaire (100) est réalisé sous la forme d'une pièce annulaire, qui présente au moins une partie annulaire (102) continue en direction périphérique, de laquelle sont saillantes en direction axiale les nervures (104) ou les pattes continues d'une seule pièce avec la partie annulaire et dans lequel la pièce annulaire (100) est solidaire, au moyen des parties d'extrémité libres des pattes ou des nervures (104), de la région périphérique extérieure d'un ou de l'autre élément (94) du dispositif de transmission de couple de rotation ou de l'autre élément de disque opposé (94), au moins par rapport à des forces agissant en direction périphérique, dans lequel
- le deuxième élément de support (48) est ou peut être assemblé, au moyen de la première formation de prise (46), de façon solidaire en rotation avec l'autre (94) des éléments de disque opposés (92, 94) et de façon déplaçable par rapport à celui-ci essentiellement dans la direction de l'axe de rotation (A), et dans lequel
- le deuxième élément de support (48) présente une deuxième formation de prise (54) essentiellement orientée radialement vers l'intérieur, de préférence en formant une denture intérieure (54), qui est ou peut venir en prise d'entraînement de rotation avec la première formation de prise (46).

2. Disque d'embrayage selon la revendication 1, **caractérisé en ce que** le deuxième élément de support (48) est formé par une pièce de disque annulaire essentiellement plane, qui présente la deuxième formation de prise (54) sur sa périphérie intérieure.

3. Disque d'embrayage selon la revendication 1 ou 2, **caractérisé en ce que** la pièce annulaire (100) est soudée à l'autre élément (94) ou à l'autre élément de disque opposé (94).

4. Disque d'embrayage selon l'une quelconque des revendications 1 à 3, **caractérisé en ce que** l'autre élément (94) ou l'autre élément de disque opposé (94) présente une couronne de découpes (108) s'étendant en direction périphérique, dans laquelle les pattes ou les nervures (104) de la pièce annulaire (100) s'engagent par complémentarité de forme par leurs parties d'extrémité libres.

5. Disque d'embrayage selon la revendication 4, **caractérisé en ce que** l'autre élément (94) ou l'autre élément de disque opposé (94) est formé, sur sa région périphérique radialement extérieure, avec une denture (108, 100), qui présente les découpes (108) entre des parties de dents (110).

6. Disque d'embrayage selon la revendication 5, **caractérisé en ce qu'**une largeur des parties de dents (110) augmente radialement vers l'extérieur en direction périphérique, afin de prévoir une prise de serrage entre les pattes ou les nervures (104) et des parties de dents (110) respectivement voisines.
